# EUROPEAN PATENT SPECIFICATION

(11) **EP 2 599 993 B1**
(45) Date of publication and mention of the grant of the patent: **06.04.2016**
(21) Application number: 11191607.8
(22) Date of filing: 01.12.2011
(51) Int. Cl.: F03D 7/02, F03D 17/00

(54) **Method to determine the yaw angle of a component of a wind turbine**
Verfahren zum Bestimmen des Gierwinkels einer Windturbinenkomponente
Procédé pour déterminer l'angle de lacet d'un composant dans une éolienne

(43) Date of publication of application: 05.06.2013
(73) Proprietor: Siemens Aktiengesellschaft, 80333 München (DE)
(72) Inventor: Esbensen, Thomas, 7400 Herning (DK); Hoegh, Gustav, 7400 Herning (DK)

(56) References cited:
- EP-A2- 2 175 130
- US-A1- 2010 143 128
- US-A1- 2011 268 569

## Description

The invention refers to a method to determine the yaw angle of a component a wind turbine, preferably to determine the yaw angle of the nacelle, the blade or the hub.

The yaw angle of a nacelle of a wind turbine is needed for an exact analysis of the characteristics or properties of the wind turbine (i.e. relevant data and parameters).

The yaw angle of the nacelle relates to a so-called and specified "yaw position" and is used as the relevant parameter for the orientation of the nacelle in view to a given landmark or geographic orientation.

The yaw angle of the nacelle is even needed to perform a sector management control. The control refers mainly to the wind direction, which is indicated by the yaw angle.

The control strategy of the dedicated wind turbine is even determined by adjacent wind turbines, which are positioned close to the dedicated wind turbine. For example the adjacent wind turbines cause wake in view to a dedicated wind turbine as they act as obstacles, too. Thus the control strategy may have to be adapted to this situation.

The sector management control is getting more important today as requirements for load-optimization, increased electrical output-power generation, acoustic noise reduction, etc., are growing.

For an improved and proper sector management control the yaw position or yaw angle of the nacelle needs to be calibrated accurately and periodically.

This sounds to be easy but very often the yaw position is not calibrated well enough or even not calibrated at all. Additionally the calibration might get lost, thus the sector management control is influenced in a bad manner.

It is known to calibrate the yaw position or the yaw angle by service technicians. They may use a certain reference mark to detect the direction of the nacelle and thus its yaw angle.

For example the spinner of the rotor hub of the nacelle is adjusted to point towards the geographical direction "North" by using a compass. This direction is used as reference direction. With the nacelle heading in this direction the yaw angle is set to the specific mark "0°" for example.

It is also known to use adequate landmarks to align the nacelle and thus to calibrate the yaw position. Especially for offshore sites there are no appropriate landmarks to be used for this calibration purpose.

Sometimes the real location of the wind turbine is changed at short notice, thus actual planning documents (like maps) might not be available for the calibration being done by the service technicians at the actual wind turbine site.

Even the alignment, being done by service technicians, may not be accurate enough. Sometimes the alignment is quite difficult due to bad weather conditions like fog, snow or rain. Even simply errors by misinterpretation of working instructions may occur by the service personal.

The calibration of the yaw position by the service personal is time extensive and is thus "high in price".

Another calibration approach is to use a magnetic compass. However the magnet compass may be interfered by magnetic material of the wind turbine. Thus this approach shows the disadvantage of a more or less inaccurate yaw angle.

Even expensive optical tools or specific compass-equipment may be required by the service personal. Thus additional costs are generated for the calibration.

Last but not least the calibration might get lost over time. With the methods described above the repeated check of the alignment and thus of the yaw angle is not easy while the accuracy over time is not guaranteed.

Document EP 2 175 130 A2 describes "systems and methods involving wind turbine bearing detection and operation". According to this method a signal from a satellite is received at a first and at a second antenna, which are disposed on a wind turbine. The positions of the first antenna and of the second antenna are determined based on the signal. A line of bearing is calculated and an angle of the line of bearing relative to a reference bearing is determined.

Document US 2010 143 128 A1 describes a wind turbine, which comprises a sensor for determining a position indicative of a yaw bearing of the wind turbine. The sensor is arranged on a blade of the wind turbine, close to its tip end. The sensor determines the position when the blade is in a substantially horizontal configuration. The wind turbine further comprises a second sensor, which is displaced from the other sensor, and which determines a second position indicative of a yaw bearing of the wind turbine.

Document US 2011 0268 569 A1 describes a method for controlling a wind turbine. The wind turbine includes a movable portion which is movable during operation of the wind turbine. The movable portion includes at least a transmitter or a receiver. The transmitter or the receiver is disposed at the movable portion. From three reference points at least one signal is sent or received by the transmitter or the receiver. Based on the signal operational parameter of the wind turbine are determined.

It is the aim of the invention to provide an improved method to detect the yaw-angle of a component of a wind turbine (like nacelle, hub or even a blade) in an accurate manner and even in a long-time-valid manner.

This aim is reached by the features of claim 1.

Preferred configurations are addressed by the dependent claims.

The invention refers to a method to determine the yaw angle of a component of a wind turbine.

The method invented allows the determination of the yaw angle quite accurate and can be repeated quite easy, too.

The yaw angle can be evaluated and calibrated regularly without additional efforts. Even service personal is not needed any more as the whole method can be done remote-controlled. For example relevant position-data of the sensor or sensors are transferred to a controller, who might take care for all relevant proceedings in view to the yaw angle of the nacelle.

An accurate knowledge of the yaw angle of the nacelle is gathered by a simple installation and of at least one receiver.

The method invented allows the calibration and the check of the yaw angle automatically and even "off site". There is no longer the need for experienced service technicians for a repeated calibration of the yaw angle for example.

The determination of the yaw angle position can be done if the wind turbine is in operation or not. Thus bad weather conditions do not influence the yaw angle determination.

The method invented avoids human errors while the resulting yaw angle is as accurate as possible.

The invention is shown in more detail by help of figures. The figures show preferred configurations and do not limit the scope of the invention.
- FIG 1: shows a first preferred configuration to determine the yaw-angle according to the invention, and
- FIG 2: shows an other configuration to determine the yaw-angle.
- FIG 3: and FIG 4 show different "planes of rotation" resulting from the yaw angle determination as described by help of FIG 1, and
- FIG 5: shows the determination of the yaw direction by help of a normal vector in view to FIG 3 and FIG 4.

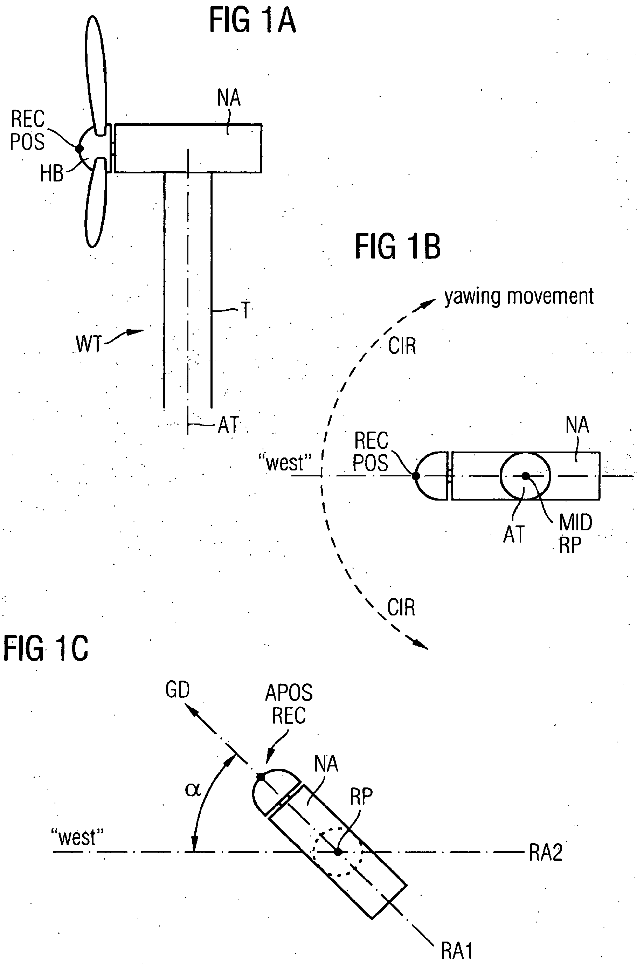

FIG 1 shows a first preferred configuration to determine the yaw-angle according to the invention in different views.

FIG 1A and FIG 1B show one receiver REC of an automated and autonomous positioning system (for example a GPS-system) is used to generate position-data POS of the receiver REC.

The receiver REC is arranged at the hub HB of the wind turbine WT and is subjected to a yawing movement of the nacelle NA of the wind turbine WT.

The nacelle NA is subject of a yawing-movement, thus the nacelle NA is turned around the centre-axis AT or the longitudinal axis AT of the tower T by a specified range of angles.

During the yawing movement the position data POS of the receiver REC are monitored, thus at least a part of a circle CIR is defined. The centre MID of the circle CIR is determined and used as reference point RP.

This reference point RP is used as "common point of intersection" of a first reference axis RA1 and a second reference axis RA2.

After this calibration the nacelle NA is turned into the incoming wind as shown in FIG 1C.

The actual position-data APOS of the receiver REC are determined. This position-data APOS and the position data of the reference point RP are used to define the first reference axis A1, which in turn defines an actual orientation of the nacelle NA in reference to a geographic direction GD.

The second reference axis RA2 defines an orientation of the nacelle NA in reference to a predefined geographic direction - in this case the geographic direction of "west" is used.

The first reference axis RA1 and the second reference axis RA2 meet at the common point of intersection RP.

The angle α between the first reference axis RA1 and the second reference axis RA2 is determined as yaw angle of the nacelle NA.

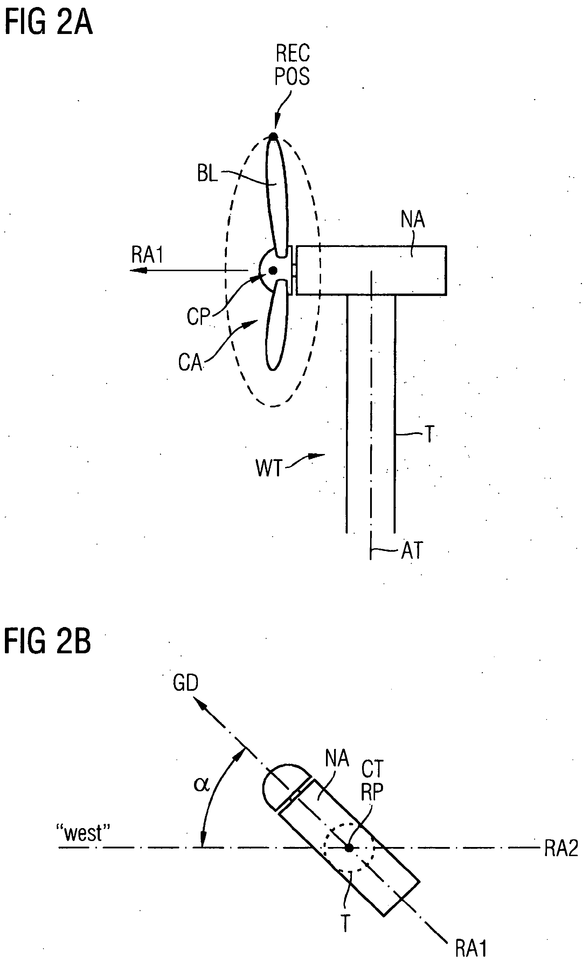

FIG 2 shows an other configuration to determine the yaw-angle.

According to FIG 2A one receiver REC of an automated and autonomous positioning system (for example a GPS-system) is used to generate position-data POS of the receiver REC..

The receiver REC is arranged at a turning blade BL of the wind turbine WT. Due to this specific location the receiver REC is subjected to a yawing movement of the nacelle NA of the wind turbine WT.

The position data POS of the receiver REC are measured while the blade BL is turning thus a circle-area CA is defined by the turning movement of the blade BL.

An axis is determined, which is perpendicular to the circle area CA and which comprises the center-point CP of the circle. This axis is used as first reference axis RA1.

The first reference axis RA1 defines the actual orientation of the nacelle NA in reference to a geographic orientation.

As shown in FIG 2B the first reference axis RA1 meets a second reference axis RA2 in a "common point of intersection" or reference point RP.

The centre CT of the tower T as seen from above might be used as "common point of intersection" or reference point RP. The position data of this centre CT may be well known or might be fixed by help of an appropriate GPS-receiver or the like.

The second reference axis RA2 defines an orientation of the nacelle NA in reference to a predefined landmark or in reference to a predefined geographic direction - in this case the geographic direction of "west" is used.

The first reference axis RA1 and the second reference axis RA2 meet at the reference point RP.
The angle α between the first reference axis RA1 and the second reference axis RA2 is determined as yaw angle of the nacelle NA.

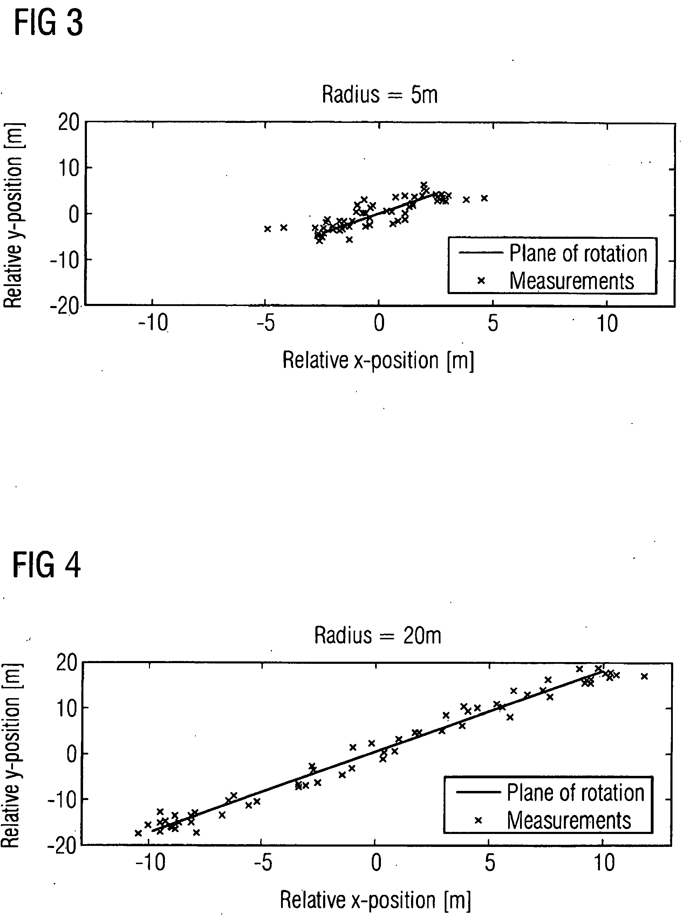

FIG 3 and FIG 4 show different "planes of rotation" resulting from the yaw angle determination as described by FIG 1.

The plane of rotation as shown in FIG 3 results from a position-measurement-circle with a radius of 5 meter. Thus the receiver is arranged at a distance of 5 m from the rotor centre and towards the blade tip.
The plane of rotation is defined by the positions measurements which are marked as "x" in FIG 3.

The plane of rotation as shown in FIG 4 results from a position-measurement-circle with a radius of 20 meter. Thus the receiver is arranged at a distance of 20 m from the rotor centre and towards the blade tip.
The plane of rotation is defined by the positions measurements which are marked as "x" in FIG 4.

The "x" in FIG 3 and FIG 4 visualizes even position-datapoints being collected during 1 minute of operation. They are sampled each second, while the rotor shows a speed of 16 rotations per minute.

The plane of rotation as shown in FIG 4 is more accurate than the plane of rotation as shown in FIG 3. The accuracy of the yaw angle determination is improved or increased by a widened spatial span.

Based on the "x" marked data points the slope of the plane of rotation is determined - shown as continuous line.

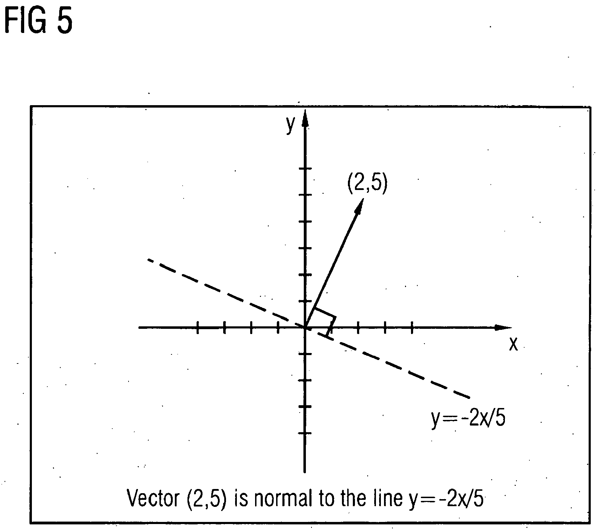

The yaw direction is determined by simply determining the normal vector to the plane of rotation (the continuous line). This is illustrated in FIG 5.

## Claims

1. Method to determine the yaw angle of a nacelle of a wind turbine,
- wherein the nacelle (NA) is subjected to a predefined yawing-movement, thus the nacelle (NA) is turned around the longitudinal axis (AT) of the tower (T) of the wind turbine by a specified range of angles,
- while one receiver (REC) of an automated and autonomous positioning system is arranged at the hub (HB) of the wind turbine (WT), thus the receiver is subjected to the yawing movement of the nacelle (NA),
- wherein the receiver (REC) is used to generate position data (POS) of the receiver (REC), thus the position data (POS) of the receiver (REC) are monitored during the yawing movement defining at least a part of a circle (CIR),
- wherein the centre (MID) of the circle (CIR) is determined and used as reference point (RP), while the reference point (RP) is used as a common point of intersection of a first reference axis (RA1) and a second reference axis (RA2),
- wherein the nacelle (NA) is turned into the incoming wind after this calibration,
- wherein actual position-data (APOS) of the receiver (REC) are determined,
- wherein the actual position-data (APOS) and the position data of the reference point (RP) are used to define the first reference axis (RA1), while the first reference axis (RA1) defines the actual orientation of the nacelle (NA) in reference to the second reference axis (RA2), while the second reference axis (RA2) defines the orientation of the nacelle (NA) in reference to a predefined geographic direction, and
- wherein the angle between the first reference axis (RA1) and the second reference axis (RA2) is determined as yaw angle of the nacelle (NA).

2. Method according to claim 1, wherein position-data of a GPS-receiver or a GLONASS-receiver or a GALILEO-receiver are used.

3. Method according to claim 1 or 2, wherein the determination of the yaw angle is repeated automatically.

## Patentansprüche

1. Verfahren zum Bestimmen eines Gierwinkels einer Gondel einer Windenergieanlage,
- wobei die Gondel (NA) einer vordefinierten Gierbewegung ausgesetzt ist, so dass die Gondel (NA) um einen festgelegten Winkelbereich um die Längsachse (AT) des Turms (T) der Windenergieanlage gedreht wird,
- wobei ein Empfänger (REC) eines automatisierten und autonomen Positionsbestimmungssystems an der Nabe (HB) der Windenergieanlage (WT) angeordnet ist, so dass der Empfänger der Gierbewegung der Gondel (NA) ausgesetzt ist,
- wobei der Empfänger (REC) verwendet wird, um Positionsdaten (POS) des Empfängers (REC) zu erzeugen, so dass die Positionsdaten (POS) des Empfängers (REC) während der Gierbewegung überwacht werden, die wenigstens einen Teil eines Kreises (CIR) definiert,
- wobei der Mittelpunkt (MID) des Kreises (CIR) bestimmt und als ein Referenzpunkt (RP) verwendet wird, wobei der Referenzpunkt (RP) als ein gemeinsamer Schnittpunkt einer ersten Referenzachse (RA1) und einer zweiten Referenzachse (RA2) verwendet wird,
- wobei die Gondel (NA) nach dieser Kalibrierung in den ankommenden Wind gedreht wird,
- wobei Ist-Positionsdaten (APOS) des Empfängers (REC) bestimmt werden,
- wobei die Ist-Positionsdaten (APOS) und die Positionsdaten des Referenzpunktes (RP) verwendet werden, um die erste Referenzachse (RA1) zu definieren, wobei die erste Referenzachse (RA1) die Ist-Ausrichtung der Gondel (NA) in Bezug auf die zweite Referenzachse (RA2) definiert, wobei die zweite Referenzachse (RA2) die Ausrichtung der Gondel (NA) in Bezug auf eine vordefinierte geografische Richtung definiert, und
- wobei der Winkel zwischen der ersten Referenzachse (RA1) und der zweiten Referenzachse (RA2) als Gierwinkel der Gondel (NA) bestimmt wird.

2. Verfahren nach Anspruch 1, wobei Positionsdaten eines GPS-Empfängers oder eines GLONASS-Empfängers oder eines GALILEO-Empfängers verwendet werden.

3. Verfahren nach Anspruch 1 oder 2, wobei die Bestimmung des Gierwinkels automatisch wiederholt wird.

## Revendications

1. Procédé pour déterminer l'angle de lacet d'une nacelle d'une éolienne,
- dans lequel la nacelle (NA) est soumise à un mouvement de lacet prédéfini, ainsi la nacelle (NA) est tournée autour de l'angle longitudinal (AT) du mât (T) de l'éolienne selon une plage spécifiée d'angles,
- tandis qu'un récepteur (REC) d'un système de positionnement automatisé et autonome est agencé au niveau du moyeu (HB) de l'éolienne (WT), ainsi le récepteur est soumis au mouvement de lacet de la nacelle (NA),
- dans lequel le récepteur (REC) est utilisé pour générer des données de position (POS) du récepteur (REC), ainsi les données de position (POS) du récepteur (REC) sont surveillées au cours du mouvement de lacet définissant au moins une partie d'un cercle (CIR),
- dans lequel le centre (MID) du cercle (CIR) est déterminé et utilisé en tant que point de référence (RP), tandis que le point de référence (RP) est utilisé en tant que point commun d'intersection d'un premier axe de référence (RA1) et d'un deuxième axe de référence (RA2),
- dans lequel la nacelle (NA) est tournée vers le vent entrant après cet étalonnage,
- dans lequel des données de position effective (APOS) du récepteur (REC) sont déterminées,
- dans lequel les données de position effective (APOS) et les données de position du point de référence (RP) sont utilisées pour définir le premier axe de référence (RA1), tandis que le premier axe de référence (RA1) définit l'orientation effective de la nacelle (NA) en référence au deuxième axe de référence (RA2), tandis que le deuxième axe de référence (RA2) définit l'orientation de la nacelle (NA) en référence à une direction géographique prédéfinie, et
- dans lequel l'angle entre le premier axe de référence (RA1) et le deuxième axe de référence (RA2) est déterminé en tant qu'angle de lacet de la nacelle (NA).

2. Procédé selon la revendication 1, dans lequel des données de position d'un récepteur GPS ou d'un récepteur GLONASS ou d'un récepteur GALILEO sont utilisées.

3. Procédé selon la revendication 1 ou 2, dans lequel la détermination de l'angle de lacet est répétée automatiquement.
